# EUROPÄISCHE PATENTSCHRIFT

(11) **EP 1 859 522 B1**
(45) Veröffentlichungstag und Bekanntmachung des Hinweises auf die Patenterteilung: **10.02.2016**
(21) Anmeldenummer: 06723028.4
(22) Anmeldetag: 10.02.2006
(51) Int. Cl.: H02G 5/02

(54) **SAMMELSCHIENEN-MONTAGEVORRICHTUNG**
APPARATUS FOR MOUNTING BUSBARS
DISPOSITIF DE MONTAGE POUR DES BARRES DE DISTRIBUTION

(30) Priorität: 05.03.2005 DE 102005010219
(43) Veröffentlichungstag der Anmeldung: 28.11.2007
(73) Patentinhaber: Rittal GmbH & Co. KG, 35745 Herborn (DE)
(72) Erfinder: WAGENER, Hans, 35716 Dietzhölztal (DE)
(74) Vertreter: Angerhausen, Christoph
(86) Internationale Anmeldenummer: PCT/EP2006/001253
(87) Internationale Veröffentlichungsnummer: WO 2006/094597

(56) Entgegenhaltungen:
- EP-A- 0 745 505
- DE-A1- 1 515 485
- DE-C1- 3 922 690

## Beschreibung

Die Erfindung bezieht sich auf eine Sammelschienen-Montageanordnung aus mehreren Sammelschienen und mindestens einem auf einer Tragstruktur anbringbaren Sammelschienenhalter, der mindestens eine Fußaufnahme zum Einbringen eines Fußabschnittes einer der Stromsammelschienen und Fixieren desselben mittels eines Haltestückes aufweist, wobei das Haltestück als an einem Basisteil des Sammelschienenhalters lösbar anbringbares oder lösbar angebrachtes separates Teil ausgebildet ist, das zum Anbringen an einer angepassten Haltestückaufnahme des Basisteils einen Verbindungsabschnitt und zum Fixieren des Fußabschnitte einen diesen übergreifenden Kopfteil aufweist. Eine Sammelschienen-Montageanordnung mit diesen Merkmalen ist in der EP 0 745 505 A1 offenbart.

Eine weitere Sammelschienen-Montageanordnung ist in RITTAL Handbuch 29 (Druckdatum 09/97) auf den Seiten 546, 552 und 553 gezeigt. Bei dieser bekannten Sammelschienen-Montageanordnung werden Sammelschienen mit im Querschnitt seitlich abstehenden flachen Fußabschnitten in daran angepassten Fußaufnahmen von Sammelschienenhaltern aufgenommen. Die Fußaufnahmen sind entsprechend dem Querschnitt der Fußabschnitte geformt und beidseitig hinterschnitten. Ein Zwischenabschnitt der Stromsammelschienen tritt durch eine mittlere Längsöffnung der Fußaufnahmen aus dem Sammelschienenhalter hervor und geht an seinem von dem Sammelschienenhalter abgekehrten Ende in einen nach einer Seite abgewinkelten flachen Kontaktierabschnitt über. Insbesondere bei relativ langen Stromsammelschienen dieser Art ist also bei der Montage eine relative Längsverschiebung zwischen Stromsammelschiene und Sammelschienenhalter erforderlich.

Der Erfindung liegt die Aufgabe zugrunde, eine Sammelschienen-Montageanordnung der eingangs genannten Art bereitzustellen, mit der vereinfachte Montagemöglichkeiten geboten werden.

Diese Aufgabe wird mit den Merkmalen des Anspruches 1 gelöst. Hierbei ist vorgesehen, dass der Abstand zwischen den einander zugekehrten Längsrändern der über den Sammelschienenhalter vorstehenden Kontaktierabschnitte zweier benachbarter Stromsammelschienen kleiner ist als die Ausdehnung des Kopfteiles des Haltestückes in Längsrichtung des Sammelschienenhalters und dass die Höhe des Haltestückes von seiner dem Basisteil zugekehrten Unterseite bis zu seiner von dem Basisteil weggerichteten Oberseite so auf den lichten Abstand zwischen dem jeweiligen Kontaktierabschnitt und der Fußaufnahme abgestimmt ist, dass das Haltestück schräg zwischen den einander zugekehrten Längsrändern der Kontaktierabschnitte der zwei benachbarten Stromsammelschienen einführbar, anschließend kippbar und dann senkrecht zur Oberseite des Basisteils in die Fußaufnahme einsteckbar ist.

Mit diesen Maßnahmen kann die Montage von Stromsammelschienen in den Sammelschienenhaltern einfach dadurch vorgenommen werden, dass zunächst die Sammelschienenhalter auf einer Plattform montiert und anschließend die StromSammelschienen einfach von vorn bzw. von oben mit ihren Fußabschnitte in die betreffenden Fußaufnahmen des Sammelschienenhalters eingesetzt und anschließend die Haltestücke mit dem Basisteil verbunden werden.

Für eine einfach auszuführende, sichere Verbindung bestehen alternative vorteilhafte Ausgestaltungsmöglichkeiten darin, dass die Haltestückaufnahme als von zwei Wandbereichen des Basisteils beidseitig begrenzter Hohlraum und der Verbindungsabschnitt als in diesen einführbarer Steckabschnitt oder dass umgekehrt die Haltestückaufnahme als Steckabschnitt und der Verbindungsabschnitt als diesen aufnehmender Hohlraum ausgebildet ist. Mit diesen Maßnahmen kann das Haltestück einfach und eindeutig in dem Verbindungsabschnitt stabil festgelegt werden.

Zu einer einfachen Handhabung bei der Installation tragen weiterhin die Maßnahmen bei, dass pro eingesetztem Haltestück zwei einander zugekehrte Abschnitte der Fußabschnitte zweier benachbarter Stromsammelschienen übergriffen sind.

Ein einfacher Aufbau wird dabei dadurch erreicht, dass die Verbindungsabschnitte und die Haltestückaufnahmen Verriegelungsmittel aufweisen, die miteinander unmittelbar oder über mindestens ein weiteres Verriegelungselement mittelbar miteinander zusammenwirken, um das Haltestück an dem Basisteil lösbar festzulegen. Eine unmittelbare Festlegung kann z.B. mittels angeformter Rastelemente und Gegenrastelemente als Verriegelungsmittel an den Verbindungsabschnitten bzw. Haltestückaufnahmen erfolgen. Eine mittelbare Verbindung kann mittels Schrauben oder Steckzapfen hergestellt werden.

Dabei besteht eine vorteilhafte Ausgestaltung für eine einfache Handhabung und sichere Verbindung darin, dass die Verriegelungsmittel der Haltestückaufnahmen in quer zur Längsrichtung des Sammelschienenhalters verlaufenden Zapfenaufnahmen und die Verriegelungsmittel der Verbindungsabschnitte in mit den Zapfenaufnahmen im eingesteckten Zustand fluchtenden Fixieröffnungen bestehen und dass das Verriegelungselement In einem jeweiligen durch die Zapfenaufnahmen und die Fixieröffnungen einbringbaren Verbindungselement besteht.

Hierbei ergeben sich ein einfacher Aufbau und eine einfache Bedienung vorteilhaft dadurch, dass das Verbindungselement als Verbindungszapfen mit einem Schaft ausgebildet ist, an dessen einem Ende ein Kopfabschnitt und an dessen anderem Endbereich mindestens ein Rastelement angeordnet sind.

Zu einer einfachen, sicheren und stabilen Anbringung der Stromsammelschienen tragen des Weiteren die Maßnahmen bei, dass die beiden in Längsrichtung des Sammelschienenhalters äußeren Fußaufnahmen in beiderseitigen Endabschnitten des Basisteils eingeformte Hinterschneidungen aufweisen, in die ein seitlicher Abschnitt des zugeordneten Fußabschnittes durch eine Verschiebung der Stromsammelschiene quer zu ihrer Längsrichtung einschiebbar Ist.

Dabei besteht eine für die Festlegung der Stromsamelschienen vorteilhafte Ausgestaltung darin, dass der Fußabschnitt der Strömsammelschienen im Querschnitt beiderseits unterschiedlich lange Abschnitte aufweist und dass die Hinterschnitte in den beiden Endabschnitten entsprechend den unterschiedlich langen Abschnitten der Fußabschnitte unterschiedlich tief ausgebildet sind.

Die Montage bei eindeutiger Anordnung der Stromsammelschienen wird weiterhin dadurch begünstigt, dass eine zwischen zwei äußeren Fußaufnahmen angeordnete innere Fußaufnahme an die Breite des Fußabschnittes angepasst ist.

Die Handhabung bei der Montage wird ferner dadurch begünstigt, dass die äußeren Fußaufnahmen um die Länge der jeweiligen Hinterschneidung breiter sind als die Breite des Fußabschnittes. Mit diesen Maßnahmen können die Stromsammelschienen auch in die äußeren Fußaufnahmen einfach eingesetzt und anschließend durch einfaches seitliches Verschieben in Längsrichtung des Sammelschienenhalters fixiert werden, wonach dann die betreffenden Haltestücke eingesetzt werden. Der durch das Verschieben frei gewordene Raum in den äußeren Fußaufnahmen wird mittels eines Füllstückes, das vorteilhafterweise an den Haltestücken angeformt ist, ausgefüllt.

Eine stabile Festlegung der Stromsammelschienen in den Sammelschienenhaltern kann mit einfachen Maßnahmen dadurch vorgenommen werden, dass die Kopfteile der Haltestücke in einem den zugeordneten Abschnitt des Fußabschnittes überragenden Bereich mit senkrecht zur Oberseite des Sammelschienenhalters gerichteten Gewindebohrungen versehen sind.

Die Erfindung wird nachfolgend anhand von Ausführungsbeispielen unter Bezugnahme auf die Zeichnungen näher erläutert. Es zeigen:
- Fig. 1: eine seitliche Ansicht einer Sammelschienen-Montageanordnung mit in einem Sammelschienenhalter eingesetzten Stromsammelschienen,
- Fig. 2: die Montageanordnung nach Fig. 1 mit abgenommenen Haltestücken,
- Fig. 3: die Montageanordnung nach Fig. 1 in perspektivischer Ansicht ohne eingesetzte Stromsammelschienen,
- Fig. 4: eine perspektivische Ansicht der Montageanordnung nach Fig. 3 ohne Haltestücke,
- Fig. 5: die Montageanordnung nach Fig. 4 mit eingesetzten Stromsammelschienen in perspektivischer Ansicht,
- Fig. 6: die Montageanordnung nach Fig. 5 mit abgenommenen Haltestücken in perspektivischer Ansicht,
- Fig. 7: die Montageanordnung nach Fig. 6 in einer anderen perspektivischen Ansicht,
- Fig. 8: die Montageanordnung nach den vorangegangenen Fig. mit eingesetzten, aber noch nicht festgelegten Haltestücken in perspektivischer Ansicht,
- Fig. 9: die Montageanordnung nach Fig. 8 mit festgelegten Haltestücken in perspektivischer Ansicht,
- Fig. 10: die Montageanordnung nach Fig. 9 in einer anderen perspektivischen Ansicht,
- Fig. 11: eine seitliche Ansicht eines weiteren Ausführungsbeispiels der Stromsammelschienen-Montageanordnung gegenüber Fig. 1 mit anderen Stromsammelschienen,
- Fig. 12: die Montageanordnung nach Fig. 11 bei abgenommenen Haltestücken in einer gegenüberliegenden Seitenansicht,
- Fig. 13: eine perspektivische Ansicht der Haltevorrichtung nach den Fig. 11 und 12 ohne Stromsammelschienen,
- Fig. 14: die Montageanordnung nach Fig. 13 mit eingesetzten Stromsammelschienen,
- Fig. 15: die Montageanordnung nach den Fig. 11 bis 14 ohne Stromsammelschienen und Haltestücke in perspektivischer Ansicht und
- Fig. 16: die Montageanordnung nach Fig. 15 mit eingesetzten Stromsammelschienen und abgenommenen Haltestücken.

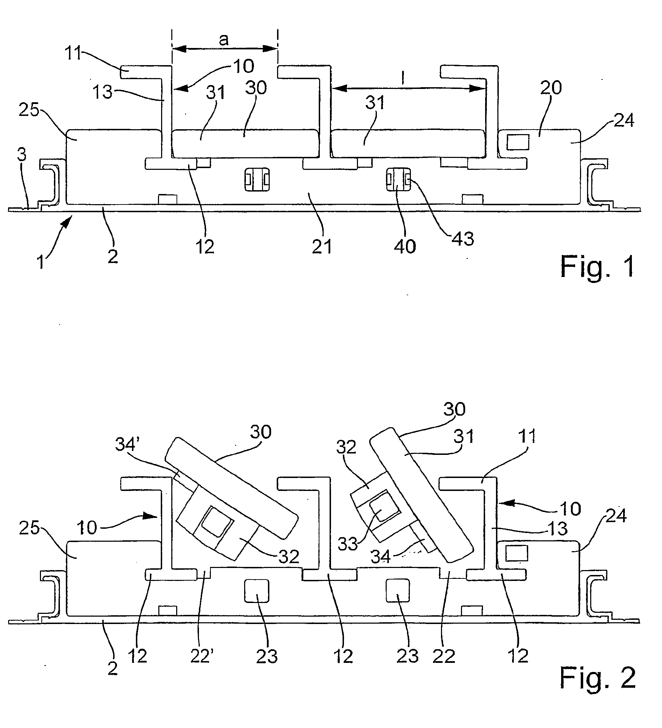

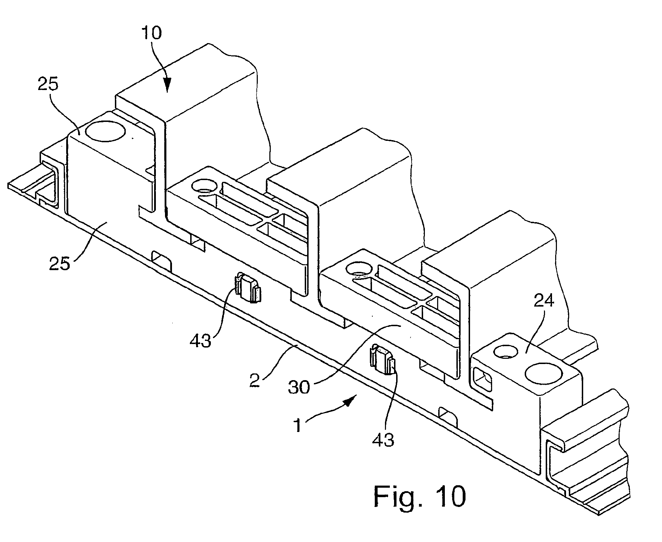

Fig. 1 zeigt eine Montageanordnung 1 bzw. ein Montagesystem für Stromsammelschienen mit einer flachen Plattform 2, die seitliche, rechtwinklig vorstehende Ränder mit nach außen abgewinkelten Endabschnitten aufweist und zwischen Profilleisten 3 gehalten Ist. Die Plattform 2 kann ihrerseits auf einem geeigneten Traggerüst montiert sein und sich über die gesamte Länge darauf zu montierender Stromsammelschienen 10 oder lediglich über eine Teillänge derselben erstrecken. Auf der Plattform 2 zwischen den seitlichen Rändern, und zwar vorliegend über die gesamte Breite der Plattform 2, sind Sammelschienenhalter 20 beispielsweise mittels Schrauben oder durch Verrasten angebracht, in denen die Stromsammelschienen 10 mit flach aufliegenden Fußabschnitten 12 festgelegt sind. Die Fußabschnitte 12 gehen auf ihrer Oberseite in daran einstückig angeformte, rechtwinklig zur Oberseite des Sammelschienenhalters 20 herausgeführte stegartige Zwischenabschnitte 13 über, die an ihren nach außen abstehenden Endabschnitten In seitlich parallel zur Montageebene abgewinkelte Kontaktierabschnitte 11 übergehen. Der Fußabschnitt 12 einer Stromsammelschiene 10 weist auf jeder Seite des Zwischenabschnittes 13 einen seitlichen flanschartig vorstehenden Abschnitt auf, die bei vorliegender Ausführungsform unterschiedliche Länge besitzen, wie auch die Fig. 2, 6, 6, 7 und 10 erkennen lassen.

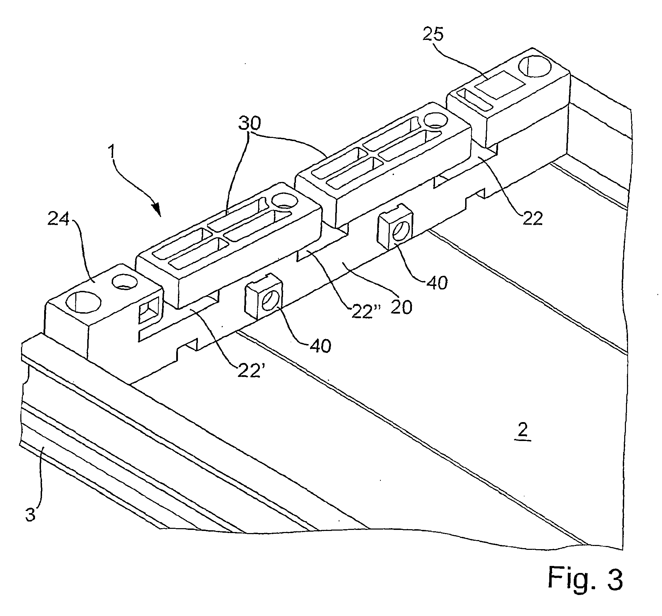

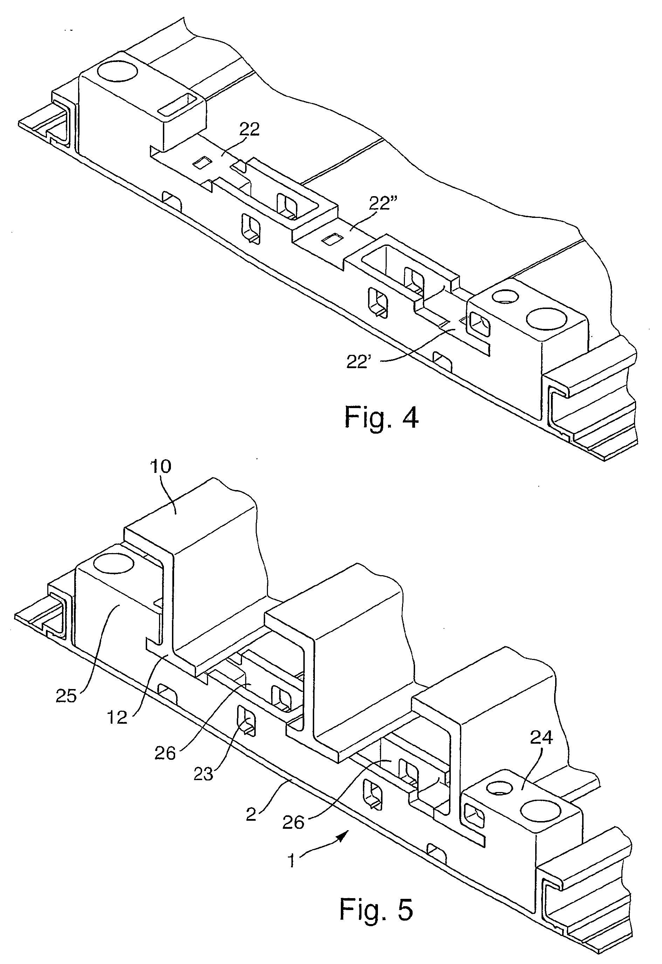

Wie Fig. 1 weiter zeigt, besteht der Sammelschienenhalter 20 im Wesentlichen aus einem Basisteil 21 mit seitlichen Endabschnitten 24 bzw. 25 und aus in das Basisteil eingesetzten und in diesem abnehmbar festgelegten Haltestücken 30. In dem Basisteil 21 sind an die Fußabschnitte 12 der Stromsammelschienen 10 angepasste Fußaufnahmen 22, 22', 22" eingearbeitet, wie u.a. aus den Fig. 2 bis 4 ersichtlich. Die den beiden Endabschnitten 24, 25 benachbarten Fußaufnahmen 22, 22', deren Grundebene mit derjenigen der mittleren Fußaufnahme 22 parallel zur Montageebene fluchtet, gehen zu den Endabschnitten 24 bzw. 25 hin in darin angebrachte Hinterschneidungen über, deren Tiefe an die betreffende Länge des zugekehrten Abschnittes des Fußabschnittes 12 angepasst sind und auch In ihrer Weite senkrecht zur Montageebene an die Stärke der betreffenden Abschnitte der jeweiligen Fußabschnitte 12 angepasst sind. Die Breite der äußeren Fußaufnahmen 22, 22' entsprechen der Breite des Fußabschnittes plus der Tiefe der jeweiligen Hinterschneidung. Durch diese Auslegung der äußeren Fußaufnahmen 22, 22' können die Stromsammelschienen 10 auf einfache Weise senkrecht zur Montageebene in die Fußaufnahmen 22, 22' eingesetzt und anschließend mit dem betreffenden Abschnitt des Fußabschnittes 12 in die jeweils zugeordnete Hinterschneidung durch eine seitliche Bewegung in Längsrichtung des Sammelschienenhalters 20 und parallel zur Montageebene eingeschoben werden. Die sich ergebende seitliche Lücke in der Fußaufnahme 22 bzw. 22' wird anschließend durch ein jeweils angepasstes Füllstück ausgefüllt, das vorliegend als Füllabschnitt 34, 34' an dem betreffenden Haltestück 30 angeformt ist, so dass auch ein seitliches Verschieben der Stromsammelschienen 10 im festgelegten Zustand sicher verhindert wird, wie z.B. anhand der Fig. 1 nachvollziehbar ist.

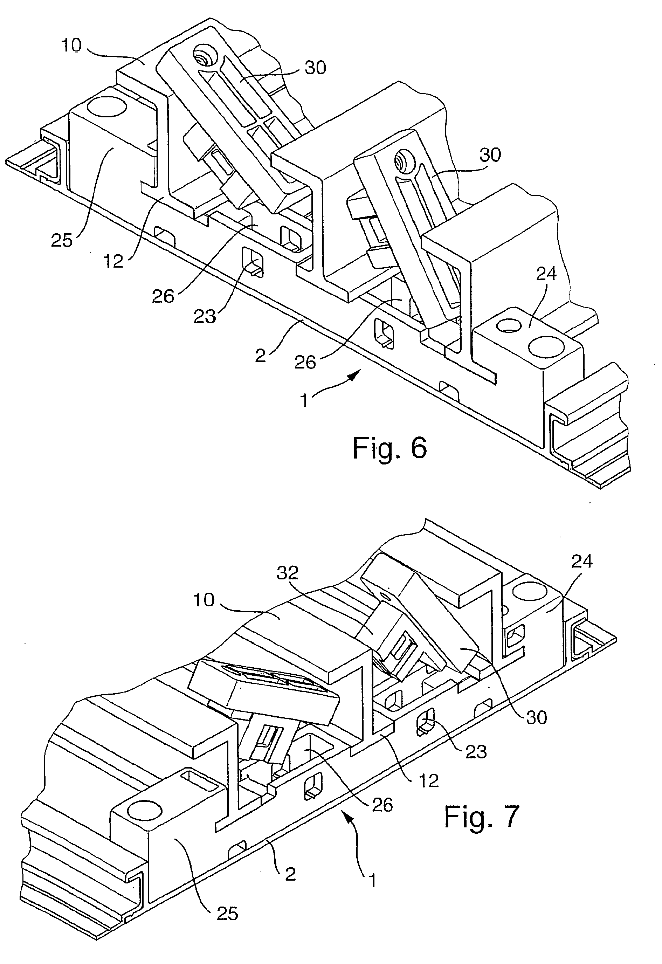

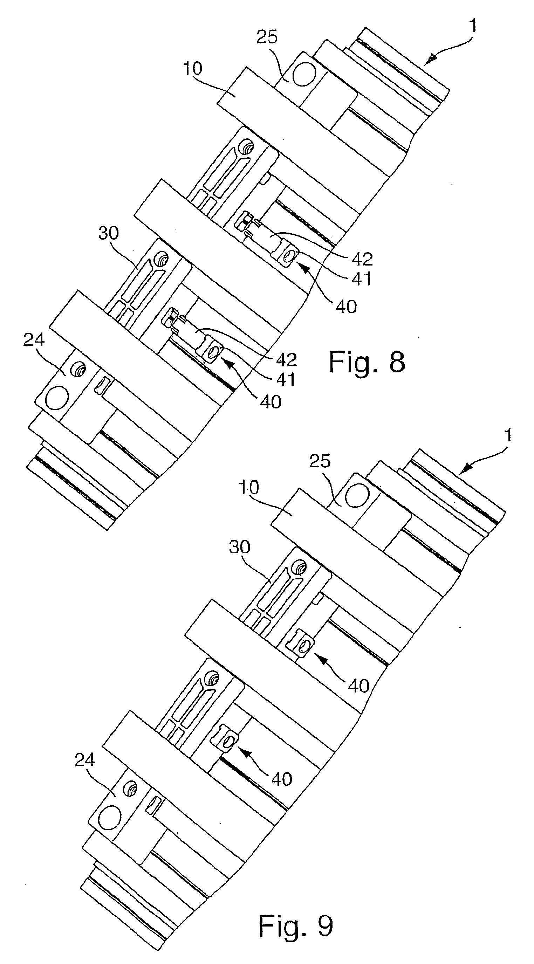

Wie aus den Fig. 1 und 2 weiterhin ersichtlich, ist ein Abstand a zwischen den einander zugekehrten Längsrändern zweier benachbarter Stromsammelschienen 10 vorliegend kleiner als die Länge I eines Kopfteils 31 des Haltestückes 30. Daher kann das Haltestück 30 bei Stromsammelschienen 10 mit abgewinkeltem Kontaktierabschnitt 11 nicht ohne Weiteres senkrecht zur Montageebene eingesetzt werden, sondern wird schräg in den sich ergebenden lichten Raum zwischen zwei benachbarten Stromsammelschienen 10 eingeführt, dann in die Horizontale geschwenkt und schließlich senkrecht zur Montageebene in das Basisteil 21 mit einem Verbindungsabschnitt 32 eingesetzt. Die Länge I des Kopfteiles 31 entspricht dabei im Wesentlichen dem Abstand zwischen den Zwischenabschnitten 13 zweier benachbarter Stromsammelschienen 10 und ist an seinen im eingesetzten Zustand senkrechten schmalen Rändern vorteilhaft etwas abgeschrägt oder abgerundet, so dass ein einfaches Schwenken zwischen den Stromsammelschienen 10 in die zu der Montageebene parallele Lage ermöglicht wird. Außerdem ist die Höhe des Haltestückes 30 von der dem Basisteil 21 zugekehrten Unterseite des Verbindungsabschnittes 32 bis zu der von dem Basisteil 21 abgekehrten Oberseite des Kopfteiles 31 so bemessen, dass das Haltestück 30 ohne Schwierigkeiten in eine in dem Basisteil 21 ausgebildete Haltestückaufnahme 26 eingesetzt werden kann, wie beispielsweise die Fig. 6 und 7 erkennen lassen. Die Haltestückaufnahme 26 ist als Hohlraum mit einer oder mehreren Kammern in dem Basisteil 21 zwischen zwei seitlichen Wandabschnitten desselben ausgebildet und auch in Längsrichtung des Sammelschienenhalters 20 durch Wandabschnitte begrenzt, so dass der an die Haltestückaufnahme 26 im Querschnitt im Wesentlichen angepasste Verbindungsabschnitt 32 des Haltestückes 30 eindeutig in der Haltestückaufnahme 26 aufgenommen wird, wobei in dem Hohlraum noch weitere Führungs- oder Haltestrukturen eingearbeitet sein können. Der Verbindungsabschnitt 32 weist eine quer zu dem Sammelschienenhalter 20 verlaufende, durchgehende Fixieröffnung 33 auf, die im eingesetzten Zustand des Haltestückes 30 mit Zapfenaufnahmen 23 in den die Haltestückaufnahme 26 begrenzenden Wandabschnitten des Basisteils 21 fluchten. Zum Festlegen des Haltestückes 30 wird durch die Zapfenaufnahmen 23 und die Fixieröffnung 33 ein Verbindungselement 40 mit einem Schaft 42 eingeschoben, das in der Endstellung mit einem Kopfabschnitt 41 an der einen Außenseite eines Wandabschnittes des Basisteils 21 anliegt und mit an Rastfedem angebrachten Rastelementen 43 an dem anderen Endabschnitt des Schaftes 42 an dem gegenüberliegenden Wandabschnitt des Basisteils 21 verrastet, wie die Fig. 1, 3, 8, 9 und 10 erkennen lassen. Die Zapfenaufnahmen 23 in dem Basisteil 21 sowie die Fixieröffnung 33 sind vorliegend im Querschnitt eckig, insbesondere quadratisch, entsprechend dem Querschnitt des Verbindungselementes 40 in dessen Schaftbereich geformt. Vor dem Einsetzen des Haltestückes 30 in die Haltestückaufnahme 26 kann das Verbindungselement 40 mit seinen Rastelementen 43 unter Freilassen der Haltestückaufnahme 26 an einem Wandabschnitt des Basisteils 21 vorfixiert werden, um es dann nach Einsetzen des Haltestückes 30 auf einfache Weise durch dessen Fixieröffnung 33 zu schieben.

Sind die Stromsammelschienen 10 mit den Haltestücken 30 in der vorstehend beschriebenen Weise in dem Sammelschienenhalter 20 fixiert, kann eine endgültige spielfreie Befestigung mittels jeweiliger Klemmschrauben vorgenommen werden, die in Gewindebohrungen 35 in den Haltestücken 30 bzw. einem Endabschnit 24 eingedreht werden, wozu die Gewindebohrungen 35 über einem Abschnitt, nämlich vorliegend dem längeren Abschnitt des Fußabschnittes 12 senkrecht zur Montageebene angeordnet sind.

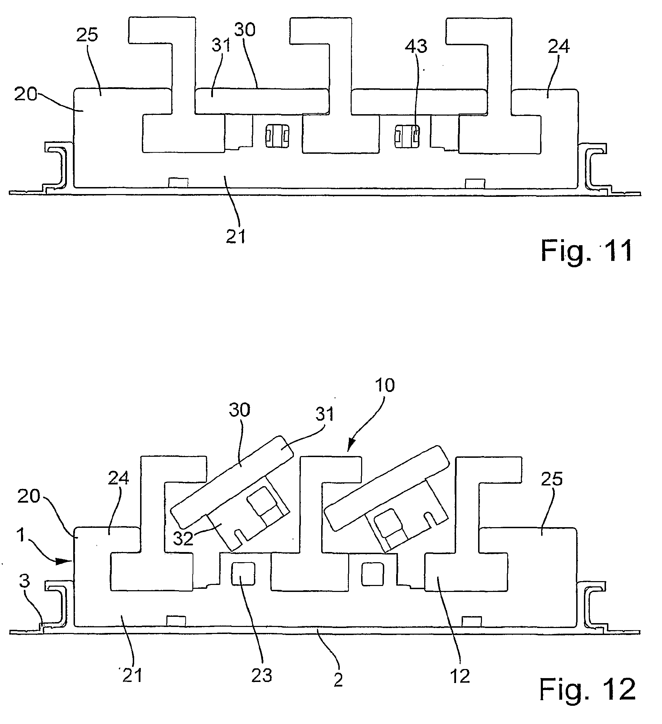

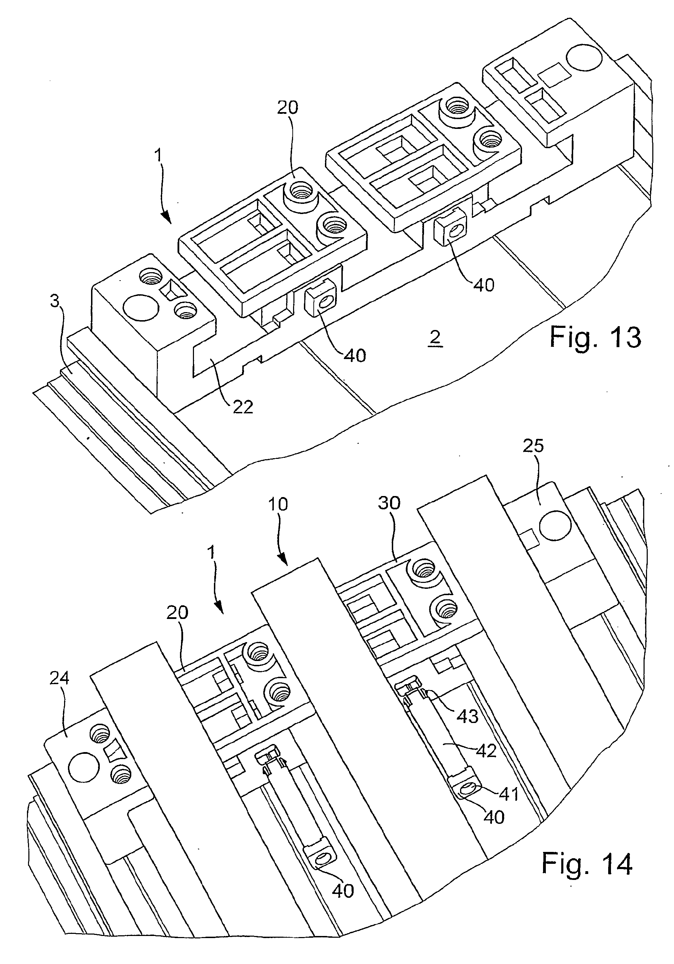

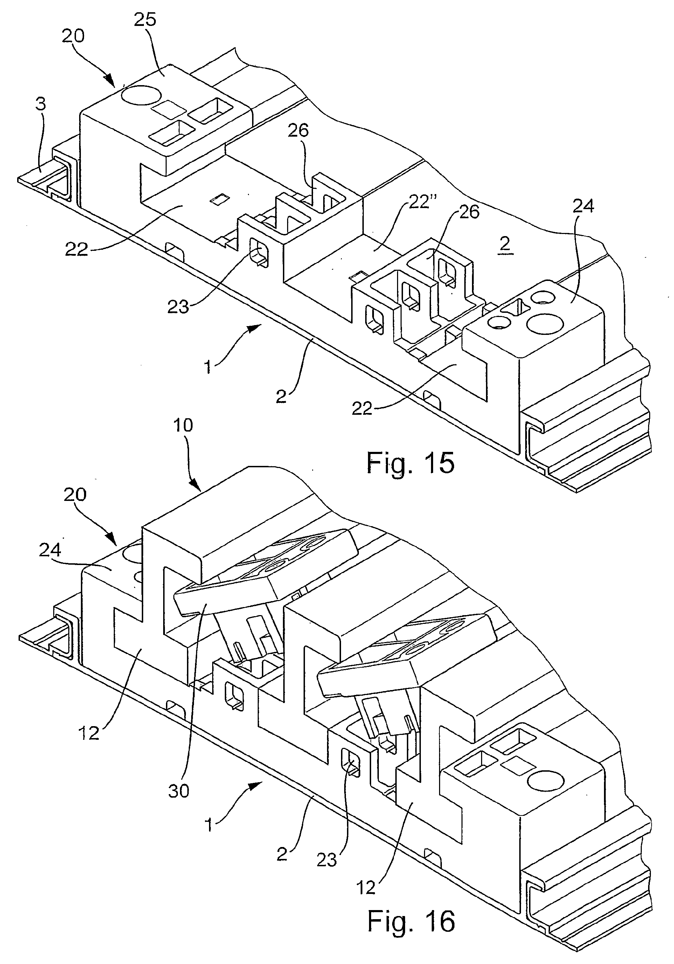

Die Fig. 11 bis 16 zeigen ein abgewandeltes Ausführungsbeispiel der Sammelschienen-Montageanordnung, wobei die Sammelschienenhalter 20 mit den darin ausgebildeten Fußaufnahmen 22 an Stromsammelschienen 10 mit Fußabschnitten 12 angepasst sind, deren seitlich abstehenden Abschnitte gleich lang sind. Hierbei sind die Hinterschneidungen in den beiden Endabschnitten 24, 25 des Basisteils 21 entsprechend gleich tief ausgebildet. Die Grundfläche der äußeren Fußaufnahmen sind von den Hinterschneidungen abgekehrt leicht stufig ausgebildet, da die Abschnitte des Fußabschnittes 12 relativ kurz ausgebildet sind und auf diese Weise auch bei der Abstufung noch ein relativ leichtes Einführen der Abschnitte des Fußabschnittes 12 unter die Hinterschneidung ermöglicht wird. Die Abstufung der Basisebene hat dabei den Vorteil einer eindeutigen Positionierung. Die nach dem Einsetzen in die Hinterschneidung auf der von dieser abgelegenen Seite entstehende Aussparung wird wiederum, wie bei dem vorhergehenden Ausführungsbeispiel, von einem an dem Verbindungsabschnitt 32 des Haltestückes 30 angeformten Füllabschnitt 34 ausgefüllt, so dass die in die Hinterschneidungen eingeführten Fußabschnitte 12 unverschieblich festgelegt sind, wenn das Haltestück 30 eingesetzt ist. Bei eingesetztem Haltestück 30 sind auch hierbei die Stromsammelschienen 10 sicher fixiert und können ebenfalls durch Einbringen von Klemmschrauben in Gewindebohrungen 35 festgespannt werden.

Außerdem sind die Sammelschienenhalter 20 nach den Fig. 11 bis 16 gegenüber dem vorstehend beschriebenen Ausführungsbeispiel verstärkt, nämlich verbreitert ausgeführt, wobei die Haltestückaufnahme 26 als Zweikammer-Hohlraum mit längs gerichteter Trennwand ausgeführt und entsprechend der Verbindungsabschnitt 32 der Haltestücke 30 doppelt ausgeführt ist und auch in der Trennwand eine Zapfenaufnahme und in beiden Teilen der Verbindungsaufnahmen Fixieröffnungen 33 eingebracht sind.

Bei beiden Ausführungsformen der Montageanordnung ist die zwischen den äußeren Fußaufnahmen 22, 22' (bei dem hier gezeigten System mit drei Stromsammelschienen) angeordnete mittlere Fußaufnahme 22 bzw. 22" so breit ausgebildet, wie der Fußabschnitt 12, wobei die betreffende Stromsammelschiene 10 einfach senkrecht zur Montageebene eingesetzt werden kann. Die Kopfteile 31 der Haltestücke 30 überragen beidseitig die einander zugekehrten Abschnitte der benachbarten Fußabschnitte 12, so dass mit einem Haltestück 30 die Fußabschnitte 12 zweier benachbarter Stromsammelschienen 10 an den betreffenden Abschnitten übergriffen werden.

## Patentansprüche

1. Sammelschienen-Montageanordnung aus mehreren Sammelschienen (10) und mindestens einem auf einer Tragstruktur anbringbaren Sammelschienenhalter (20), der mindestens eine Fußaufnahme (22, 22', 22") zum Einbringen eines Fußabschnittes (12) einer der Stromsammelschienen (10) und Fixieren desselben mittels eines Haltestückes (30) aufweist, wobei das Haltestück (30) als an einem Basisteil (21) des Sammelschienenhalters (20) lösbar anbringbares oder lösbar angebrachtes separates Teil ausgebildet ist, das zum Anbringen an einer angepassten Haltestückaufnahme (26) des Basisteils (21) einen Verbindungsabschnitt (32) und zum Fixieren des Fußabschnittes (12) einen diesen übergreifenden Kopfteil (31) aufweist,
**dadurch gekennzeichnet,**
**dass** der Abstand (a) zwischen den einander zugekehrten Längsrändern der über den Sammelschienenhalter (20) vorstehenden Kontaktierabschnitte (11) zweier benachbarter Stromsammelschienen (10) kleiner ist als die Ausdehnung (I) des Kopfteiles (31) des Haltestückes (30) in Längsrichtung des Sammelschienenhalters (20) und
**dass** die Höhe des Haltestückes (30) von seiner dem Basisteil (21) zugekehrten Unterseite bis zu seiner von dem Basisteil (21) weggerichteten Oberseite so auf den lichten Abstand zwischen dem jeweiligen Kontaktierabschnitt (11) und der Fußaufnahmen (22, 22', 22") abgestimmt ist, dass das Haltestück (30) schräg zwischen den einander zugekehrten Längsrändern der Kontaktierabschnitte der zwei benachbarten Stromsammelschienen (10) einführbar, anschließend kippbar und dann senkrecht zur Oberseite des Basisteils (21) in die Fußaufnahme (22, 22', 22") einsteckbar ist.

2. Montageanordnung nach Anspruch 1,
**dadurch gekennzeichnet,**
**dass** die Haltestückaufnahme (26) als von zwei Wandbereichen des Basisteils (21) beidseitig begrenzter Hohlraum und der Verbindungsabschnitt (32) als in diesen einführbarer Steckabschnitt oder
**dass** umgekehrt die Haltestückaufnahme (26) als Steckabschnitt und der Verbindungsabschnitt als diesen aufnehmender Hohlraum ausgebildet ist.

3. Montageanordnung nach Anspruch 1,
**dadurch gekennzeichnet,**
**dass** pro eingesetztem Haltestück (30) zwei einander zugekehrte Abschnitte der Fußabschnitte (12) zweier benachbarter Stromsammelschienen (10) übergriffen sind.

4. Montageanordnung nach Anspruch 1,
**dadurch gekennzeichnet,**
**dass** die Verbindungsabschnitte (32) und die Haltestückaufnahmen (26) Verriegelungsmittel aufweisen, die miteinander unmittelbar oder über mindestens ein weiteres Verriegelungselement mittelbar miteinander zusammenwirken, um das Haltestück (30) an dem Basisteil (21) lösbar festzulegen.

5. Montageanordnung nach Anspruch 4,
**dadurch gekennzeichnet,**
**dass** die Verriegelungsmittel der Haltestückaufnahmen (26) in quer zur Längsrichtung des Sammelschienenhalters (20) verlaufenden Zapfenaufnahmen (23) und die Verriegelungsmittel der Verbindungsabschnitte (32) in mit den Zapfenaufnahmen (23) im eingesteckten Zustand fluchtenden Fixieröffnungen (33) bestehen und
**dass** das Verriegelungselement in einem jeweiligen durch die Zapfenaufnahmen (23) und die Fixieröffnungen (33) einbringbaren Verbindungselement (40) besteht.

6. Montageanordnung nach Anspruch 5,
**dadurch gekennzeichnet,**
**dass** das Verbindungselement (40) als Verbindungszapfen mit einem Schaft (42) ausgebildet ist, an dessen einem Ende ein Kopfabschnitt (41) und an dessen anderem Endbereich mindestens ein Rastelement (43) angeordnet sind.

7. Montageanordnung nach einem der Ansprüche 1 bis 6,
**dadurch gekennzeichnet,**
**dass** die beiden in Längsrichtung des Sammelschienenhalters (20) äußeren Fußaufnahmen (22, 221) in beiderseitigen Endabschnitten (24, 25) des Basisteils (21) eingeformte Hinterschneidungen aufweisen, in die ein seitlicher Abschnitt des zugeordneten Fußabschnittes (12) durch eine Verschiebung der Stromsammelschiene (20) quer zu ihrer Längsrichtung einschiebbar ist.

8. Montageanordnung nach Anspruch 7,
**dadurch gekennzeichnet, dass** der Fußabschnitt (12) der Stromsammelschienen (20) im Querschnitt beiderseits unterschiedlich lange Abschnitte aufweist und
dass die Hinterschnitte in den beiden Endabschnitten entsprechend den unterschiedlich langen Abschnitten der Fußabschnitte (12) unterschiedlich tief ausgebildet sind.

9. Montageanordnung nach einem der Ansprüche 1 bis 8,
**dadurch gekennzeichnet,**
**dass** eine zwischen zwei äußeren Fußaufnahmen (22, 22') angeordnete innere Fußaufnahme (22") an die Breite des Fußabschnittes (12) angepasst ist.

10. Montageanordnung nach einem der Ansprüche 7 bis 9,
**dadurch gekennzeichnet,**
**dass** die äußeren Fußaufnahmen (22, 22') um die Länge der jeweiligen Hinterschneidung breiter sind als die Breite des Fußabschnittes (12).

11. Montageanordnung nach einem der Ansprüche 1 bis 10,
**dadurch gekennzeichnet,**
**dass** die Kopfteile (31) der Haltestücke (30) in einem den zugeordneten Abschnitt des Fußabschnittes (12) überragenden Bereich mit senkrecht Oberseite des Sammeischienenhalters (20) gerichteten Gewindebohrungen (35) versehen sind.

## Claims

1. A bus bar mounting assembly having multiple bus bars (10) and at least one bus bar holder (20) which can be applied to a support structure and having at least one base receptacle (22, 22', 22") for inserting a base section (12) of a bus bar (10) and fixing the base section (12) in place by a holding element (30), the holding element (30) being a separate element, releasably, attachable on a base element (21) of the bus bar holder (20) and, for attachment to a matched holding element receptacle (26) of the base element (21) has a connecting section (32) and for fixation in place of the base section (12) has a head piece (31) extending over the base section (12),
**characterized in that** the wherein a distance (a) between facing longitudinal edges of the contacting sections (11) protruding past the bus bar holder (20) of two adjoining bus bars (10) is less than an extension (1) of the head piece (31) of the holding element (30) in a longitudinal direction of the bus bar holder (20), and
the height of the holding element (30) from an underside facing the base element (21) to a top facing away from the base element (21) is matched to a clearance between the respective contacting section (11) and the base receptacle (22, 22', 22") so that the holding element (30) is insertable canted between the facing longitudinal edges of the contacting sections of two adjoining bus bars (10) and is then tiltable and may then be plugged into the base receptacle (22, 22', 22") perpendicularly with respect to the top of the base element (21).

2. The mounting device in accordance with claim 1, wherein one of the holding element receptacle (26) is a hollow space bordered on both sides by wall areas of the base element (21) and the connecting section (32) is a plug-in section insertable in the hollow space, and the holding element receptacle (26) is a plug-in section and the connecting section is a hollow space receiving the plug-in section.

3. The mounting device in accordance with claim 1, wherein the inserted holding element (30) has two portions of the base sections (12) facing each other of two adjoining bus bars (10) that overlap.

4. The mounting device in accordance with claim 1, wherein the connecting sections (32) and the holding element receptacles (26) have locking devices working together via at least one further locking element to fix the holding element (30) releasably in place on the base element (21).

5. The mounting device in accordance with claim 4, wherein the locking device of the holding element receptacles (26) comprise pin receivers (23) extending transversely with respect to the longitudinal direction of the bus bar holder (20), and the locking elements of the connecting sections (32) have fixation openings (33) which, in the plugged in state, are aligned with the pin receivers (23), and the locking element comprises a respective connecting element (40) which is introducible through the pin receivers (23) and the fixation openings (33).

6. The mounting device in accordance with claim 5, wherein the connecting element (40) is a connecting pin with a shaft (42) having on one end a head section (41) and in an other end area at least one snap-in element (43).

7. The mounting device in accordance with claim 1 to 6, wherein the base receptacles (22, 22') outermost in the longitudinal direction of the bus bar holder (20) have undercuts formed in end sections (24, 25) on both sides of the base element (21), into which a lateral portion of the associated base section (12) is pushed by displacing the bus bar (20) transversely with respect to its the longitudinal direction.

8. The mounting device in accordance with claim 7, wherein in a cross section the base section (12) of the bus bars (20) has sections each of a different length on both sides, and the undercuts in the two end sections are formed with different depths corresponding to the portions of different lengths of the base sections (12).

9. The mounting device in accordance with claims 1 to 8, wherein an inner base receptacle (22") arranged between two outer base receptacles (22, 22') is matched to a width of the base section (12).

10. The mounting device in accordance with claim 7 to 9, wherein the outer base receptacles (22, 22') are wider than the width of the base section (12) by a length of the respective undercut.

11. The mounting device in accordance with claim 1 to 10, wherein in an area projecting past the associated portion of the base section (12) the head pieces (31) of the holding elements (30) have threaded bores (35) directed perpendicularly with respect to the top of the bus bar holder (20).

## Revendications

1. Système de montage à barres omnibus, constitué de plusieurs barres omnibus (10) et d'au moins un porte-barres (20), qui est destiné à être monté sur une structure de support et qui comporte au moins un logement pour pied (22, 22', 22") destiné à recevoir un tronçon de pied (12) de l'une des barres omnibus (10) et à immobiliser celui-ci au moyen d'une pièce de retenue (30), ladite pièce de retenue (30) étant réalisée sous la forme d'une pièce séparée, qui est montée de manière amovible ou est destinée à être montée de manière amovible sur une partie de base (21) du porte-barres (20) et qui, pour la mise en place sur un logement pour pièce de retenue (26) approprié de la partie de base (21), comporte un tronçon de liaison (32), et, pour l'immobilisation du tronçon de pied (12), une partie de tête (31) s'engageant au-dessus de ce dernier,
**caractérisé**
**en ce que** la distance (a) entre les bords longitudinaux, orientés l'un vers l'autre, des tronçons de contact (11), en saillie au-dessus du porte-barres (20), de deux barres omnibus (10) voisines est inférieure à l'extension (I) de la partie de tête (31) de la pièce de retenue (30) dans le sens longitudinal du porte-barres (20), et
**en ce que** la hauteur de la pièce de retenue (30) depuis sa face inférieure orientée vers la partie de base (21) jusqu'à sa face supérieure opposée à la partie de base (21), est ajustée à la distance intérieure entre le tronçon de contact (11) respectif et le logement pour pied (22, 22', 22"), de telle sorte que la pièce de retenue (30) peut être insérée en oblique entre les bords longitudinaux orientés l'un vers l'autre des tronçons de contact des deux barres omnibus (10) voisines, être basculée ensuite et enfin être enfichée dans le logement pour pied (22, 22', 22") perpendiculairement à la face supérieure de la partie de base (21).

2. Système de montage selon la revendication 1, **caractérisé**
**en ce que** le logement pour pièce de retenue (26) est réalisé sous la forme d'une cavité délimitée de part et d'autre par deux zones de paroi de la partie de base (21), et le tronçon de liaison (32) est réalisé sous la forme d'un tronçon emboîtable à introduire dans ladite cavité, ou
**en ce que**, inversement, le logement pour pièce de retenue (26) est réalisé sous la forme d'un tronçon emboîtable et le tronçon de liaison est réalisé sous la forme d'une cavité destinée à recevoir celui-ci.

3. Système de montage selon la revendication 1, **caractérisé en ce que** pour chaque pièce de retenue (30) insérée, deux tronçons face à face des tronçons de pied (12) de deux barres omnibus (10) voisines sont enserrés par le dessus.

4. Système de montage selon la revendication 1, **caractérisé en ce que** les tronçons de liaison (32) et les logements pour pièce de retenue (26) comportent des moyens de verrouillage qui coopèrent directement entre eux ou indirectement entre eux par l'intermédiaire d'au moins un autre élément de verrouillage, afin de fixer de manière amovible la pièce de retenue (30) sur la partie de base (21).

5. Système de montage selon la revendication 4, **caractérisé**
**en ce que** les moyens de verrouillage des logements pour pièce de retenue (26) sont constitués de logements pour tenons (23), orientés transversalement au sens longitudinal du porte-barres (20), et les moyens de verrouillage des tronçons de liaison (32) sont constitués d'orifices d'immobilisation (33) alignés avec les logements pour tenons (23) dans la position enfichée, et
**en ce que** l'élément de verrouillage est constitué d'un élément de liaison (40) à introduire respectivement à travers les logements pour tenons (23) et les orifices d'immobilisation (33).

6. Système de montage selon la revendication 5, **caractérisé en ce que** l'élément de liaison (40) est réalisé sous la forme d'un tenon de liaison avec une tige (42), sur une extrémité de laquelle est disposé un tronçon de tête (41) et sur l'autre extrémité de laquelle est disposé au moins un élément de blocage (43).

7. Système de montage selon l'une quelconque des revendications 1 à 6, **caractérisé en ce que** les deux logements pour pied (22, 22') extérieurs dans le sens longitudinal du porte-barres (20) comportent des contre-dépouilles, qui sont formées dans les tronçons d'extrémité (24, 25) des deux côtés de la partie de base (21) et dans lesquelles un tronçon latéral du tronçon de pied (12) correspondant peut être inséré, sous l'effet d'un déplacement des barres omnibus (10), transversalement au sens longitudinal de celles-ci.

8. Système de montage selon la revendication 7, **caractérisé en ce que** le tronçon de pied (12) des barres omnibus (20) comporte des deux côtés, dans la section transversale, des tronçons de longueur différente et **en ce que** les contre-dépouilles dans les deux tronçons d'extrémité sont réalisées avec des profondeurs différentes en concordance avec les tronçons de longueur différente des tronçons de pied (12).

9. Système de montage selon l'une quelconque des revendications 1 à 8, **caractérisé en ce qu'**un logement pour pied (22") intérieur, disposé entre deux logements pour pied (22, 22') extérieurs, est adapté à la largeur du tronçon de pied (12).

10. Système de montage selon l'une quelconque des revendications 7 à 9, **caractérisé en ce que** les logements pour pied (22, 22') extérieurs ont une largeur supérieure, de la valeur de la longueur des contre-dépouilles respectives, à la largeur du tronçon de pied (12).

11. Système de montage selon l'une quelconque des revendications 1 à 10, **caractérisé en ce que** les parties de tête (31) des pièces de retenue (30), dans une zone au-delà du tronçon associé du tronçon de pied (12), sont munies de forures filetées (35) orientées perpendiculairement à la face supérieure du porte-barres (20).
